# EUROPÄISCHE PATENTANMELDUNG

(11) **EP 0 826 553 A2**
(43) Veröffentlichungstag der Anmeldung: **04.03.1998**
(21) Anmeldenummer: 97113120.6
(22) Anmeldetag: 30.07.1997
(51) Int. Cl.: B60N 2/48

(54) **Fahrzeugsitz mit einer an der Rückenlehne verstellbaren Kopfstütze**

(30) Priorität: 28.08.1996 DE 29614978 U
(71) Anmelder: TRW Occupant Restraint Systems GmbH, 73551 Alfdorf (DE)
(72) Erfinder: Föhl, Artur, 73614 Schorndorf (DE)
(74) Vertreter: Kitzhofer, Thomas, Dipl.-Ing.

(57) **Zusammenfassung**

Ein Fahrzeugsitz mit einer an der Rückenlehne (10) verstellbar angeordneten Kopfstütze (12), die bei einem Heckaufprall des Fahrzeugs aus einer normalen Ausgangsstellung in eine an den Kopf des Insassen angenäherte Rückhaltestellung bewegbar ist, ist dadurch gekennzeichnet, daß die Kopfstütze (12) durch eine fahrzeugsensitiv aktivierbare Stellvorrichtung (30), die mit der Kopfstütze (12) durch ein flexibles Zugmittel (20) verbunden sowie in der Rückenlehne (10) oder unter dem Fahrzeugsitz angeordnet ist, von der Ausgangsstellung in die Rückhaltestellung bewegbar ist.

## Beschreibung

Die Erfindung betrifft einen Fahrzeugsitz mit einer an der Rückenlehne verstellbar angeordneten Kopfstütze, die bei einem Heckaufprall des Fahrzeugs aus einer normalen Ausgangsstellung in eine an den Kopf des Insassen angenäherte Rückhaltestellung bewegbar ist.

Eine Kopfstütze verhindert unter anderem im Falle eines Heckaufpralls, daß der Kopf eines Fahrzeuginsassen relativ zum Fahrzeug nach hinten geschleudert wird. Üblicherweise sind Kopfstützen in die Rückenlehne einsteckbar und höhenverstellbar. Darüber hinaus gibt es auch Kopfstützen, die als verlängerter, fester Teil der Rückenlehne des Fahrzeugsitzes ausgebildet sind. Bei den zur Zeit in Fahrzeugen vorhandenen Kopfstützen sind, unabhängig, ob es sich um verstellbare der nicht verstellbare Kopfstützen handelt, bei einem Heckaufprall die Halswirbel des Fahrzeuginsassen hohen Belastungen ausgesetzt, weil der Abstand des Kopfes zur Kopfstütze trotz Anlage des Rückens an der Rückenlehne verhältnismäßig groß sein kann (bis zu 160 mm).

Um diese Belastungen zu vermindern, wurde bereits vorgeschlagen, in der Kopfstütze einen kleinen Gassack unterzubringen. Im Kollisionsfall wird, gesteuert über einen Sensor, ein Gasgenerator aktiviert, der den Gassack innerhalb weniger Millisekunden füllt. Da jedoch der Abstand des Kopfes zum Gassack sehr stark differieren kann, würde beispielsweise bei einem sehr kurzen Abstand Kopf-Kopfstütze der Kopf vom Gassack sogar abgestoßen werden, was eine unerwünschte Belastung darstellt.

Es wurden auch Einrichtungen vorgeschlagen, welche im Kollisionsfall über Feder-Speicherenergie oder mittels Pyrotechnik über eine entsprechende Auslöseeinrichtung eine Abstützung für den Kopf derart nachführen, daß sie bei Kopfkontakt sofort in der jeweiligen Stellung verharrt. Es wurde jedoch keine befriedigende Lösung der Kraftübertragung auf die Kopfabstützung gefunden.

Durch die Erfindung wird ein kostengünstig herstellbarer Fahrzeugsitz mit einer Kopfstütze bereitgestellt, die bei einem Heckaufprall die auf den Kopf und den Nackenbereich einwirkenden Kräfte reduziert.

Der erfindungsgemäße Fahrzeugsitz mit einer an der Rückenlehne verstellbar angeordneten Kopfstütze zeichnet sich dadurch aus, daß die Kopfstütze durch eine fahrzeugsensitiv aktivierbare Stellvorrichtung, die mit der Kopfstütze durch ein flexibles Zugmittel verbunden sowie in der Rückenlehne oder unter dem Fahrzeugsitz angeordnet ist, von der Ausgangsstellung in die Rückhaltestellung bewegbar ist. Das flexible Zugmittel dient der Kraftübertragung von der Stellvorrichtung auf die Kopfstütze. Die Stellvorrichtung kann daher an beliebiger Stelle angeordnet werden. Vorzugsweise wird sie unter dem Fahrzeugsitz befestigt. Die Höhenverstellbarkeit der Kopfstütze und die Verstellbarkeit der Sitzlehne werden durch das flexible Zugmittel nicht beeinträchtigt, besonders dann, wenn dieses mit einer ausreichenden Längenreserve verlegt ist. Vorzugsweise bildet das flexible Zugmittel, insbesondere ein Bowdenzug, eine Schlaufe im Inneren der Rückenlehne des Fahrzeugsitzes.

Der erfindungsgemäße Fahrzeugsitz kann mit einer verschwenkbar oder linear verschiebbar gelagerten Kopfstütze versehen sein. Im letzteren Fall ist es möglich, daß das Zugmittel unmittelbar an einem Lagerungsabschnitt der Kopfstütze, der Teil einer Linearführung ist, angreift oder daß das Zugmittel ein Zahnradritzel oder einen Hebel in Bewegung versetzt, die dann ihrerseits die Kopfstütze verschieben. Eine linear verschiebbare Kopfstütze eignet sich insbesondere für die Fahrzeugsitze im Heck.

Weitere Merkmale und Vorteile der Erfindung ergeben sich aus der folgenden Beschreibung und aus der Zeichnung, auf die Bezug genommen wird. In der Zeichnung zeigen:
- Figur 1 eine teilweise geschnittene schematische Seitenansicht eines Fahrzeugsitzes in einem Fahrzeug gemäß einer ersten Ausführungsform, bei der die Kopfstütze schwenkbar am Fahrzeugsitz gelagert ist;
- Figur 2 einen vergrößerten Teilschnitt durch die Kopfstütze des Fahrzeugsitzes;
- Figur 3 den Fahrzeugsitz nach Figur 1 schematisch in perspektivischer Ansicht von schräg vorn;
- Figur 4 einen Längsschnitt durch einen pyrotechnischen Kolben/Zylinder-Linearantrieb;
- Figur 5 eine perspektivische Ansicht einer Kopfstütze als Teil eines Fahrzeugsitzes gemaß einer zweiten Ausführungsform, wobei die Kopfstütze linear verschiebbar gelagert ist;
- Figur 6 einen Längsschnitt durch die Kopfstütze gemäß Figur 5;
- Figur 7 eine Antriebseinrichtung mit einem Zahnrad für die linear verschiebbare Kopfstütze;
- Figur 8 einen Axialschnitt durch die Antriebseinrichtung nach Figur 7; und
- Figur 9 eine weitere Antriebsmöglichkeit der linear verschiebbaren Kopfstütze, mit einem schwenkbaren Hebel.

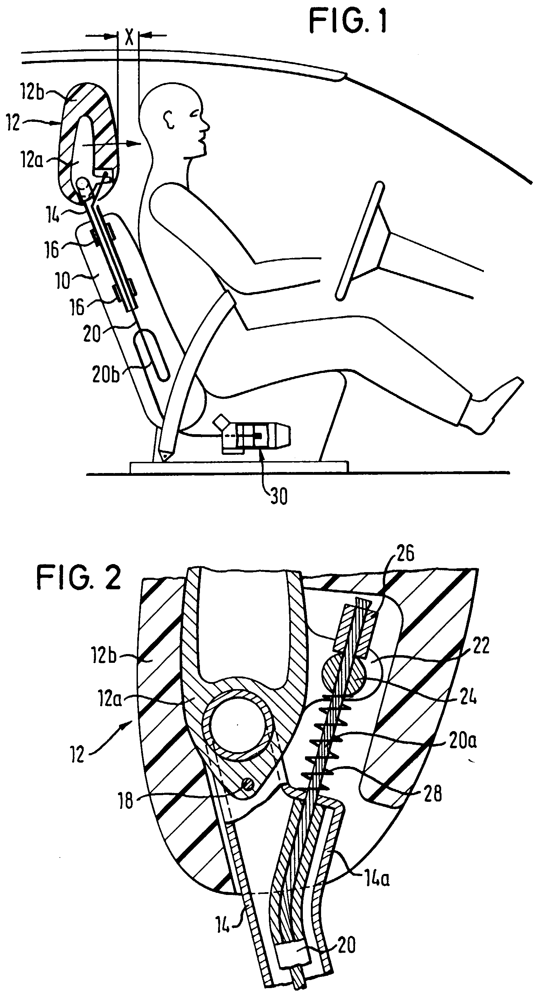

Der in Figur 1 gezeigte Fahrzeugsitz ist in üblicher Weise mit einer in die Rückenlehne 10 höhenverstellbar eingesteckten Kopfstütze 12 versehen. Die Kopfstütze 12 besteht aus einem starren, hohlen Formkörper 12a, einer diesen umgebenden Polsterung 12b und einem durch ein gebogenes Rohr gebildeten Bügel 14, dessen gerade Schenkel verschiebbar in Führungen 16 der Rückenlehne 10 aufgenommen sind.

Wie in Figur 1 dargestellt, verbleibt gewöhnlich zwischen dem Kopf eines Fahrzeuginsassen und der ihm zugewandten Fläche der Kopfstütze ein Abstand X, der 100 mm oder mehr betragen kann. Durch die erfindungsgemäße Ausbildung des Fahrzeugsitzes wird dieser Abstand X beseitigt oder zumindest stark verringert, indem die Kopfstütze 12 in Richtung des in Figur 1 ersichtlichen Pfeiles nach vorn geschwenkt und somit an den Kopf des Fahrzeuginsassen angenähert wird, wenn bei einem Heckaufprall auf das Fahrzeug ein vorbestimmter Schwellwert überschritten wird.

Die Kopfstütze 12 ist in ihrer normalen Ausgangsstellung, die in Figur 1 gezeigt ist, mittels eines Scherstiftes 18 gesichert, der durch miteinander fluchtende Bohrungen im starren Formkörper 12a und seitlich im Bügel 14 ragt. Das starre Formteil 12a ist auf dem horizontalen Rohrabschnitt des Bügels 14 drehbar gelagert. Nahe diesem horizontalen Rohrabschnitt ist der Bügel 14 auf seiner einen Seite mit einer Ausbauchung 14a versehen, die eine Führung und Abstützung für einen Bowdenzug 20 bildet. Der Bowdenzug 20 erstreckt sich durch einen der beiden Schenkel des Bügels 14, und sein Innenzug 20a tritt durch eine Öffnung in der Ausbauchung 14a des Bügels 14 aus. Der starre Formkörper 12a ist mit einem seitlich angesetzten Hebel 22 versehen, an dem das freie Ende des Innenzuges 20a des Bowdenzugs angreift. Zu diesem Zweck ist in den Hebel 22 ein Querbolzen 24 eingesetzt, durch dessen diametrale Bohrung der Innenzug 20a hindurchgeführt ist. Auf das freie Ende des Innenzugs 20a ist ein Nippel 26 kraftschlüssig aufgepreßt. Schließlich ist zwischen dem Hebel 22 und der Ausbauchung 14a des Bügels 14 eine Druckfeder 28 abgestützt, die den Innenzug 20a umgibt.

Der aus dem unteren Ende des rohrförmigen Schenkels des Bügels 14 austretende Bowdenzug ist in der Rückenlehne 10 mit einer Schlaufe 20b verlegt und erstreckt sich bis zu einem Kolben/Zylinder-Linearantrieb 30, der unter dem Fahrzeugsitz angeordnet ist. Durch die Schlaufe 20b ist der Bowdenzug 20 mit einer ausreichenden Längenreserve versehen, um die Verstellung der Rückenlehne 10 sowie der Kopfstütze 12 in keiner Weise zu beeinträchtigen.

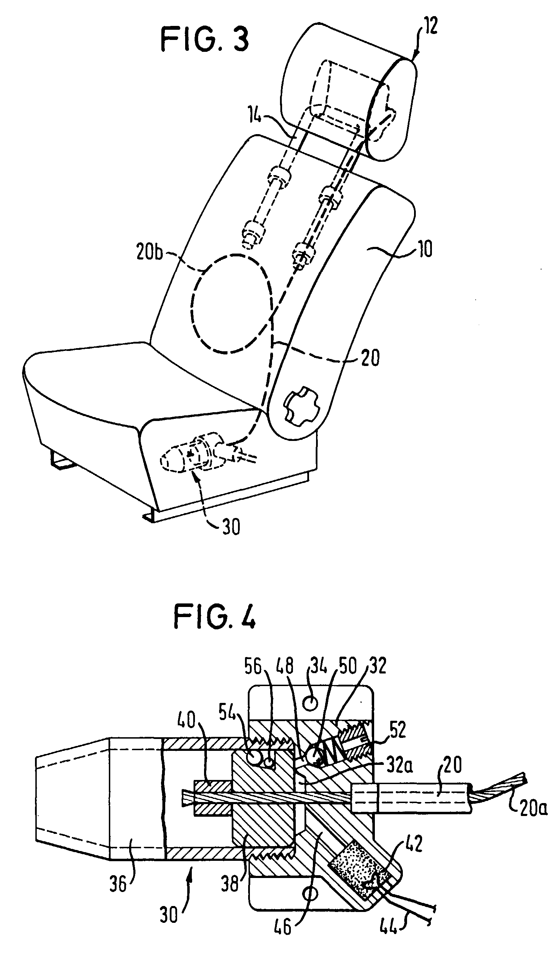

Der Kolben/Zylinder-Linearantrieb 30 besteht, wie in Figur 4 gezeigt, aus einem Gehäuse 32 mit Bohrungen 34 zur Befestigung des Gehäuses 32 an der Unterseite des Fahrzeugsitzes, einem in das Gehäuse 32 eingeschraubten Zylinderrohr 36 und einem darin verschiebbaren Kolben 38. Der Mantel des Bowdenzugs 20 ist am Gehäuse 32 abgestützt, und sein Innenzug 20a erstreckt sich mit seinem freien Ende durch eine axiale Bohrung des Kolbens 38, auf dessen vom Gehäuse 32 abgewandter Stirnseite das freie Ende des Innenzuges mit einem kraftschlüssig aufgepreßten Nippel 40 versehen ist. Das freie Ende des Zylinderrohres 36 ist kegelstumpfförmig verjüngt und dient als Kolbenfangsicherung.

In eine schräge Bohrung des Gehäuses 32 ist ein pyrotechnischer Gasgenerator 42 eingesetzt. Dieser ist mit einem elektrischen Zünder versehen, der über eine Leitung 44 mit einem (nicht gezeigten) Auslösegerät verbunden ist. Von dem Gasgenerator 42 erstreckt sich ein Kanal 46 bis zu einem Druckraum 32a, der in dem Gehäuse 32 am Boden der das Zylinderrohr 36 aufnehmenden Bohrung gebildet ist.

In den Druckraum 32a mündet auch ein weiterer Kanal 48, der nach außen durch ein Überdruckventil verschlossen ist. Dieses Überdruckventil ist durch eine federbeaufschlagte Kugel 50 gebildet, die in der sich an den Kanal 48 auswärts anschließenden, erweiterten Bohrung des Gehäuses 32 aufgenommen ist. Ein axial durchbohrter Gewindenippel 52 sichert die Kugel 50 mit der sie beaufschlagenden Druckfeder.

Der Kolben 38 ist mit einer Rücklaufsperre versehen, die aus einer am Boden einer Aussparung in der Mantelfläche des Kolbens 38 gebildeten Rampenfläche, einem darauf gelagerten Wälzkörper in Form einer Walze 54 sowie aus einem elastischen Körper 56 besteht, der die Walze 54 gegen die Innenseite des Zylinderrohres 36 drückt. Diese Rücklaufsperre behindert nicht die Bewegung des Kolbens 38 vom Gehäuse 32 fort, wohl aber seine Rückbewegung gegen das Gehäuse.

Bei einem Heckaufprall auf das Fahrzeug gibt das Auslösegerät über die Leitung 44 einen elektrischen Impuls an den Zünder des Gasgenerators 42 ab. Die von dem nun aktivierten Gasgenerator 42 freigesetzten Druckgase gelangen durch den Kanal 46 in die Druckkammer 32a und beaufschlagen die benachbarte Stirnfläche des Kolbens 38. Dieser wird im Inneren des Zylinderrohres 36 vorangetrieben und nimmt den Innenzug 20a des Bowdenzugs 20 mit. Die so bereitgestellte Antriebskraft wird nun durch den Bowdenzug 20 auf die Kopfstütze 12 übertragen und greift über das Ende des Innenzuges 20a am Hebel 22 des starren Formkörpers 12a an. Die Kopfstütze 12 wird nun, wie in Figur 1 durch einen Pfeil angedeutet, im Uhrzeigersinn verschwenkt und wird an den Kopf des Insassen angenähert. Sobald die Kopfstütze 12 mit dem Kopf des Insassen in Berührung gelangt, trifft sie auf erhöhten Widerstand, wodurch der Druck im Inneren der Druckkammer 32a bzw. des Zylinderrohres 36 ansteigt. Dieser Druckanstieg wird aber durch das Überdruckventil begrenzt, indem sich die Kugel 50 von ihrem Dichtsitz am benachbarten Ende des Kanals 48 abhebt, so daß ein Strömungsweg aus der Druckkammer 32a durch den Kanal 48 nach außen entsteht. Durch die Druckbegrenzungsfunktion des Überdruckventils wird verhindert, daß die Kopfstütze 12 wesentlich über denjenigen Winkel hinaus verschwenkt wird, bei dem die Berührung mit dem Kopf des Insassen eintritt.

Nach erfolgter Verschwenkung der Kopfstütze 12 verbleibt diese in der vorgeschwenkten Stellung, da der Kolben 38 durch die mittels der Walze 54 verwirklichen Rücklaufsperre in seiner vorgeschobenen Stellung blockiert wird. Wenn aber eine Rückbewegung der Kopfstütze zum Zweck des Abbaus von Energiespitzen gewünscht wird, muß lediglich die Wandung des Zylinderrohres 36 plastisch verformbar ausgebildet sein, so daß die Walze 54 die Rückbewegung des Kolbens 38 nicht blockiert, sondern lediglich hemmt. Der gewünschte Energieabbau erfolgt durch plastische Verformung der Wandung des Zylinderrohres 36 mittels der Walze 54.

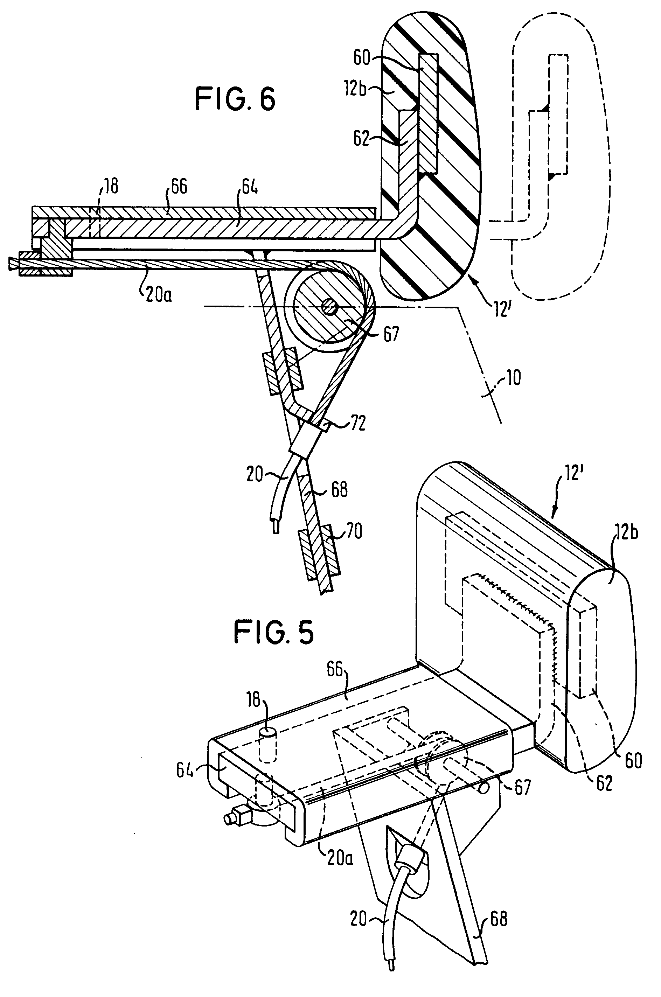

In Figur 5 ist eine linear verschiebbar geführte Kopfstütze 12' gezeigt, die eine von einer Polsterung 12b umgebene Platte 60 umfaßt, an der wiederum ein abgewinkeltes Flachprofil 62 angeschweißt ist. Der sich aus der Polsterung 12b erstreckende Arm des Flachprofils 62 bildet einen Lagerungsabschnitt 64 für die Kopfstütze 12'. Der Lagerungsabschnitt 64 ist in einer Linearführung 66 in Form einer Flachführung aufgenommen. Im Ausgangszustand verhindert ein die Linearführung 66 und den Lagerungsabschnitt 64 verbindender Scherstift 18 eine Verschiebung der Kopfstütze 12'. An dem der Kopfstütze 12' entgegengesetzten Ende des Lagerungsabschnitts 64 ist der Innenzug 20a des Bowdenzugs 20 befestigt. Der Innenzug 20a verläuft parallel zur Linearführung 66 und wird an deren vorderem Ende durch eine Rolle 67, die an einem in der Rückenlehne 10 gelagerten Rahmenteil 68 gelagert ist, in das Innere der Rückenlehne 10 gelenkt. Anstatt einer drehbaren Rolle 67 kann auch ein starrer, bogenförmiger Seilumlenker vorgesehen sein. Das plattenförmige Rahmenteil 68 wird wiederum in eine Führung 70 in der Rückenlehne 10 höhenverstellbar gesteckt. Ein zungenförmiger, abgewinkelter Lappen 72 des Rahmenteils 68 dient zur Abstützung des Mantels des Bowdenzugs 20. Die Kopfstütze 12' ist insbesondere für den Einbau in die Hecksitze geeignet, da sie eine relativ geringe Bauhöhe aufweist. Die Linearführung 66 kann waagrecht angeordnet sein oder unter einem Winkel schräg nach oben in Richtung Kopf des Insassen verlaufen.

Der Bowdenzug 20 ist auch bei der in den Figuren 5 und 6 gezeigten Ausführungsform mit einer Stelleinrichtung 30, wie sie in den Figuren 3 und 4 gezeigt ist, verbunden.

Im Kollisionsfall wird über die Stelleinrichtung 30 der Innenzug 20a kraftbeaufschlagt, was zu einem Abscheren des Scherstifts 18 und einem Verschieben der Kopfstütze 12' in die in Figur 6 mit unterbrochenen Linien gezeigte Stellung führt. Die Kraftbegrenzung und die Rücklaufsperre wirken entsprechend wie bei der in den Figuren 1 und 2 dargestellten Ausführungsform.

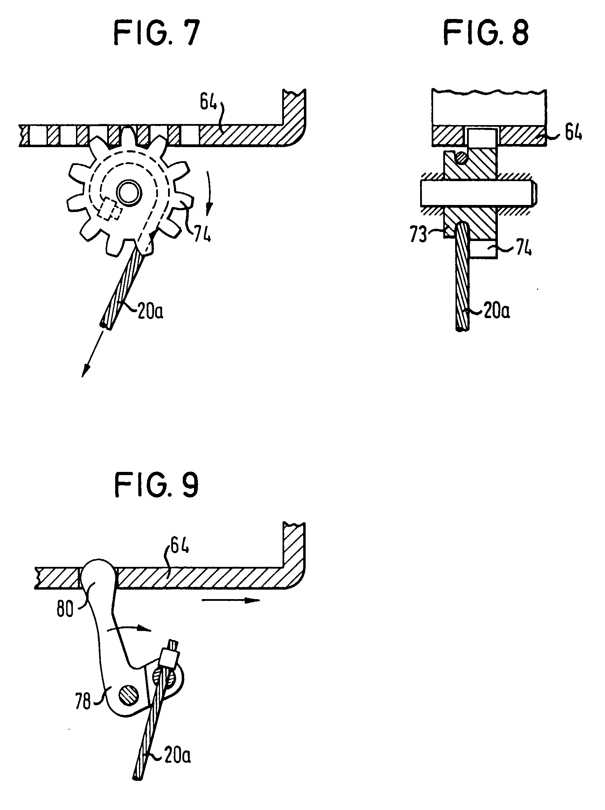

Während bei der in den Figuren 5 und 6 gezeigten Ausführungsform der Innenzug 20a unmittelbar am Lagerungsabschnitt 64 angreift, ist er bei der in den Figuren 7 und 8 dargestellten Ausführungsform an einem seitlichen Flansch 73 eines Zahnradritzels 74 befestigt, welches am Rahmenteil 68 drehbar gelagert ist. Eine Rille im Flansch 73 sorgt für eine Führung des Innenzugs 20a, der den Flansch 73 annähernd einmal umschlingt. Die Zähne des Zahnradritzels 74 greifen in eine Gegenverzahnung im Lagerungsabschnitt 64 ein. Bei Verschieben des Innenzugs 20a wird das Zahnradritzel 74 in Drehung versetzt und verschiebt die Kopfstütze 12' nach Abscheren des Scherstifts 18 in Richtung Kopf des Insassen.

Bei der in Figur 9 gezeigten Ausführungsform ist der Innenzug 20a an einem ersten Arm eines zweiarmigen Hebels 78 fixiert, der schwenkbar am Rahmenteil 68 gelagert ist. Der zweite Arm 80 des Hebels 78 greift in eine Ausnehmung in dem Lagerungsabschnitt 64 ein, so daß bei Verschiebung des Innenzugs 20a und Verschwenken des Hebels 78 auch der Lagerungsabschnitt 64 und damit die Kopfstütze 12' verschoben werden. Der Hebelarm, mit dem der Innenzug 20a am ersten Arm angreift, ist vorzugsweise Kleiner als der, mit dem der zweite Arm 80 am Lagerungsabschnitt 64 angreift, wodurch eine Übersetzung ins Schnelle erreicht werden kann.

## Patentansprüche

1. Fahrzeugsitz mit einer an der Rückenlehne (10) verstellbar angeordneten Kopfstütze (12, 12'), die bei einem Heckaufprall des Fahrzeugs aus einer normalen Ausgangsstellung in eine an den Kopf des Insassen angenäherte Rückhaltestellung bewegbar ist, dadurch gekennzeichnet, daß die Kopfstütze (12, 12') durch eine fahrzeugsensitiv aktivierbare Stellvorrichtung (30), die mit der Kopfstütze (12, 12') durch ein flexibles Zugmittel (20) verbunden sowie in der Rückenlehne (10) oder unter dem Fahrzeugsitz angeordnet ist, von der Ausgangsstellung in die Rückhaltestellung bewegbar ist.

2. Fahrzeugsitz nach Anspruch 1, dadurch gekennzeichnet, daß die Stellvorrichtung (30) ein pyrotechnisch oder durch einen Druckgasspeicher aktivierbarer Kolben/Zylinder-Linearantrieb ist.

3. Fahrzeugsitz nach Anspruch 1 oder 2, dadurch gekennzeichnet, daß das Zugmittel (20) in der Rückenlehne (10) des Fahrzeugsitzes in solcher Weise frei bewegbar und mit solcher Langenreserve (20b) verlegt ist, daß es Langenänderungen aufgrund einer Verstellung der Kopfstütze (12, 12') oder der Rückenlehne (10) kompensiert.

4. Fahrzeugsitz nach einem der vorstehenden Ansprüche, dadurch gekennzeichnet, daß das Zugmittel (20) als Bowdenzug ausgebildet ist.

5. Fahrzeugsitz nach Anspruch 4, dadurch gekennzeichnet, daß der Bowdenzug (20) durch einen der hohlen Schenkel eines rohrförmigen Bügels (14) geführt ist, mit dem die Kopfstütze (12) an der Rückenlehne (10) gelagert ist.

6. Fahrzeugsitz nach einem der Ansprüche 1 bis 4, dadurch gekennzeichnet, daß die Kopfstütze (12') einen Lagerungsabschnitt (64) aufweist, der für eine lineare Verschiebung der Kopfstütze (12') in Richtung zum Kopf des Insassen in einer horizontal oder geringfügig schräg angeordneten Linearführung aufgenommen ist.

7. Fahrzeugsitz nach Anspruch 6, dadurch gekennzeichnet, daß die Linearführung höhenverstellbar ist.

8. Fahrzeugsitz nach Anspruch 6 oder 7, dadurch gekennzeichnet, daß das Zugmittel (20) unmittelbar am Lagerungsabschnitt (64) angreift und die Kopfstütze (12') im Kollisionsfall linear verschiebt.

9. Fahrzeugsitz nach Anspruch 6 oder 7, dadurch gekennzeichnet, daß das Zugmittel (20) einen Flansch eines drehbar gelagerten Zahnradritzels (74) wenigstens teilweise umfangsmäßig umschließt und an dem Zahnradritzel (74) befestigt ist, um das Zahnradritzel (74), dessen Zähne in eine Gegenverzahnung am Lagerungsabschnitt (64) eingreifen, durch Verschieben des Zugmittels (20) in Drehung versetzen zu können.

10. Fahrzeugsitz nach Anspruch 6 oder 7, dadurch gekennzeichnet, daß das Zugmittel (20) an einem Arm eines schwenkbar gelagerten Hebels (78) befestigt ist, dessen zweiter Arm (80) an dem Lagerungsabschnitt (64) angreift.

11. Fahrzeugsitz nach einem der vorstehenden Ansprüche, dadurch gekennzeichnet, daß die Kopfstütze (12, 12') in der Ausgangsstellung durch eine bei Aktivierung der Stellvorrichtung (30) überwundene Halteeinrichtung wie Scherstift (18) oder Rastfeder gehalten ist.

12. Fahrzeugsitz nach einem der vorstehenden Ansprüche, dadurch gekennzeichnet, daß die Stellvorrichtung (30) mit einer Rücklaufsperre (54) ausgestattet ist.

13. Fahrzeugsitz nach den Ansprüchen 2 und 12, dadurch gekennzeichnet, daß die Rücklaufsperre durch wenigstens einen auf einer Rampenfläche des Kolbens (38) des Kolben/Zylinder-Linearantriebs gelagerten und mit der Wandung des Zylinders (36) federnd in Eingriff gehaltenen Wälzkörper (54) gebildet ist.

14. Fahrzeugsitz nach Anspruch 13, dadurch gekennzeichnet, daß die Zylinderwandung durch den Wälzkörper (54) im Sinne einer Kraftbegrenzung durch plastische Materialverformung deformierbar ist.

15. Fahrzeugsitz nach einem der vorstehenden Ansprüche, dadurch gekennzeichnet, daß die Stellvorrichtung (30) deaktivierbar ist, wenn ein Kontakt zwischen dem Kopf des Fahrzeuginsassen und der Kopfstütze (12, 12') festgestellt wird.

16. Fahrzeugsitz nach den Ansprüchen 2 und 15, dadurch gekennzeichnet, daß der Druckraum (32a) des Kolben/Zylinder-Linearantriebs durch ein Überdruckventil (50) druckentlastbar ist.
